# EUROPÄISCHE PATENTSCHRIFT

(11) **EP 1 237 968 B1**
(45) Veröffentlichungstag und Bekanntmachung des Hinweises auf die Patenterteilung: **17.03.2004**
(21) Anmeldenummer: 00987358.9
(22) Anmeldetag: 06.12.2000
(51) Int. Cl.: C08G 18/00, C08F 8/30

(54) **CARBODIIMIDE IN EMULSIONSPOLYMERISATEN**
CARBODIIMIDES IN EMULSION POLYMERISATES
CARBODIIMIDES CONTENUS DANS DES POLYMERISATS EN EMULSION

(30) Priorität: 17.12.1999 DE 19960864
(43) Veröffentlichungstag der Anmeldung: 11.09.2002
(73) Patentinhaber: BASF AKTIENGESELLSCHAFT, 67056 Ludwigshafen (DE)
(72) Erfinder: LICHT, Ulrike, 68309 Mannheim (DE); HÄBERLE, Karl, 67346 Speyer (DE); LACH, Christian, 67098 Bad Dürkheim (DE); KIELHORN-BAYER, Sabine, 67133 Maxdorf (DE); SCHUMACHER, Karl-Heinz, 67433 Neustadt (DE)
(86) Internationale Anmeldenummer: PCT/EP2000/012279
(87) Internationale Veröffentlichungsnummer: WO 2001/044334

(56) Entgegenhaltungen:
- EP-A- 0 805 172
- US-A- 5 136 006
- US-A- 5 925 409
- PHAM H. H. WINNIK M. A.: "Polymer interdiffusion vs Cross-Linking in Carboxylic Acid- carbodiimide Latex Films" MACROMOLECULES, Bd. 32, 1999, Seiten 7692-7695, XP002167008 in der Anmeldung erwähnt

## Beschreibung

Die Erfindung betrifft eine wässrige Dispersion eines Polymeren, aufgebaut aus radikalisch polymerisierbaren Verbindungen (Monomere), dadurch gekennzeichnet, daß die dispergierten Polymerteilchen Verbindungen mit Carbodiimidgruppen (kurz Carbodiimide) enthalten und die Carbodiimide nicht durch radikalische Copolymerisation an das Polymer gebunden sind

Im weiteren betrifft die Erfindung Verfahren zur Herstellung der wässrigen Dispersion und ihre Verwendung als Bindemittel.

Carbodiimidgruppen reagieren mit Carbonsäuregruppen zu einer N-Acylharnstoffverbindung. Carbodiimidverbindungen eignen sich daher als Vernetzer für Carbonsäuregruppen enthaltende Polymere.

Aus EP-A-686 626 ist bekannt, wasserlösliche Carbodiimide als Vernetzer der wässrigen Phase von Emulsionspolymerisaten zuzusetzen. Ein Nachteil dieser Verfahrensweise ist, daß die Carbodiimide durch entsprechende Umsetzung z.B. mit ionischen Verbindungen zunächst in eine wasserlösliche Form gebracht werden müssen. Weiterhin sind die Lagerstabilitäten der wässrigen Dispersionen unzureichend. Die Verarbeitung kann allenfalls als 2 Komponenten (2K)-System erfolgen.

Alternativ können gemäß Hung H. Pham und Mitchell A. Winnik Macromolecules 1999, 32, 7692 - 7695 copolymerisierbare Carbodiimide als Comonomere bei der Emulsionspolymerisation verwendet werden. Die erhaltenen Emulsionspolymerisate sind dann mit Carboxylgruppen vernetzbar. Die Herstellung derartiger copolymerisierbarer Carbodiimide ist z.B. auch in EP-A-808828 beschrieben. Auch in diesem Fall ist eine aufwendige chemische Synthese notwendig, um geeignete Carbodiimide, welche eine polymerisierbare ethylenisch ungesättigte Gruppe haben, herzustellen.

Aufgabe der vorliegenden Erfindung waren daher mit Carbodiimiden vernetzbare Polymerdispersionen unter Verwendung einfacher Carbodiimide, wie sie aus üblichen Isocyanaten unter Abspaltung von Kohlendioxid erhältlich sind. Die wässrigen Dispersionen sollen lagerstabil sein und gute anwendungstechnische Eigenschaften haben.

Demgemäß wurde die eingangs definierte wässrige Dispersion gefunden. Gefunden wurden auch verfahren zur Herstellung der Dispersion und die Verwendung der Dispersion als Bindemittel.

Die erfindungsgemäß in der wässrigen Dispersion vorliegenden Carbodiimide sind als solche bekannt und zum Beispiel in WO 99/06460 beschrieben.

Es handelt sich dabei um Verbindungen mit mindestens einer Carbodiimidgruppe der Formel -N=C=N-. Die Carbodiimide im Rahmen der vorliegenden Erfindung enthalten keine polymerisierbaren ethylenisch ungesättigte Gruppen. Bevorzugt enthalten die Carbodiimide 1 bis 20 Carbodiimidgruppen.

Die Carbodiimide haben vorzugsweise eine Wasserlöslichkeit kleiner 100 g, insbesondere kleiner 50 g und besonders bevorzugt kleiner 10 g bzw. kleiner 1 g pro Liter Wasser bei 21°C.

Das zahlenmittlere Molgewicht Mₙ beträgt vorzugsweise 100 bis 10000 besonders bevorzugt 200 bis 5000 und ganz besonders 500 bis 2000 g/mol.

Das zahlenmittlere Molekulargewicht wird bestimmt durch Endgruppenanalyse der Diisocyanate (d.h. Verbrauch der Isocyanatgruppen durch-Carbodiimidbildung, s. unten) oder falls die Endgruppenanalyse nicht möglich ist, durch Gelpermeationschromatographie (Polystyrolstandard, THF als Elutionsmittel).

Carbodiimidgruppen sind in einfacher Weise aus zwei Isocyanatgruppen unter Abspaltung von Kohlendioxid erhältlich:

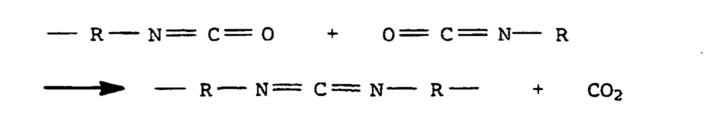

Ausgehend von Diisocyanaten sind so oligomere Verbindungen mit mehreren Carbodiimidgruppen und gegebenenfalls Isocyanatgruppen, insbesondere endständigen Isocyanatgruppen, erhältlich.

Die noch vorhandenen Isocyanatgruppen können z.B. mit Alkoholen, Thiolen, primären oder sekundären Aminen weiter umgesetzt werden, unter Bildung von Urethan, Thiourethan oder Harnstoffgruppen. Bevorzugt enthalten die Alkohole, Thiole, primären und sekundären Amine außer Hydroxylgruppen, Thiolgruppen und primären bzw. sekundären Aminogruppen keine weiteren funktionellen Gruppen. Die Carbodiimide können daher Isocyanatgruppen und deren vorstehende Umsetzungsprodukte enthalten.

Die Carbodiimide enthalten vorzugsweise keine ionischen Gruppen und keine Polyalkylenoxidgruppen mit mehr als 5 Ethylenoxideinheiten, insbesondere enthalten sie generell keine Polyalkylenxidgruppen mit mehr als 5 Alkylenoxideinheiten. Ganz, besonders bevorzugt enthalten sie weder ionische Gruppen noch Alkylenoxydgruppen.

Besonders bevorzugt bestehen die Carbodiimide aus den Carbodiimidgruppen, Kohlenwasserstoffgruppen und gegebenenfalls Isocyanatgruppen bzw. deren Umsetzungsprodukte mit Hydroxyl-, Thiol-, primären oder sekundären Aminogruppen.

Bevorzugt sind Carbodiimide, die unter Kohlendioxidabspaltung aus Polyisocyanaten, insbesondere Diisocyanaten erhältlich sind.

Als Diisocyanate in Betracht kommen z.B. Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Die Gesamtmenge der Carbodiimide wird vorzugsweise so gewählt, daß je 1 kg Polymer 0,0001 bis 2 mol, insbesondere 0,001 bis 2 mol, besonders bevorzugt 0,01 bis 2 mol und ganz besonders bevorzugt 0,025 bis 1 mol Carbodiimidgruppen vorliegen. Ein besonders bevorzugter Bereich ist auch 0,05 bis 1 bzw. bis 0,5 Mol.

Bei dem dispergierten Polymeren handelt es sich um ein Polymer, welches aus radikalisch polymerisierbaren Verbindungen (Monomere) durch Polymerisation erhältlich ist.

Bevorzugt ist das Polymer zu mindestens 40 Gew.-%, besonders bevorzugt bei mindestens 60 Gew.-% aus sogenannten Hauptmonomeren, ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren aufgebaut.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt werden Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt; solche mit einer Doppelbindung sind z.B. Ethen oder Propen.

Neben diesen Hauptmonomeren kann das Polymer weitere Monomere, z.B. Hydroxylgruppen enthaltende Monomere, insbesondere C₁-C₁₀-Hydroxyalkyl(meth)acrylate, (Meth)acrylamid, ethylenisch ungesättigte Säuren, insbesondere Carbonsäuren, wie (Meth)acrylsäure oder Itaconsäure, und deren Anhydride, Dicarbonsäuren und deren Anhydride oder Halbester, z.B. Maleinsäure, Fumarsäure und Maleinsäureanhydrid als Bestandteile enthalten.

Säuregruppen liegen im Polymer vorzugsweise zumindest teilweise zunächst nicht in freier Form vor, da sie mit den Carbodiimiden vernetzen. Soweit Säuregruppen im Polymer gewünscht sind, können diese durch chemische Reaktion, z.B. durch veresterung oder Veretherung, blockiert oder einfach durch Zugabe einer Base, z.B. Alkalihydroxyde wie NaOH neutralisiert werden. Insbesondere eignen sich dazu bei 21°C flüchtige Basen wie Ammoniak, die später leicht abgetrennt werden können bzw. bei der späteren Verwendung entweichen. Nach Entfernung des Blockierungsmittels oder der Base liegt dann die freie Säure vor und eine Vernetzung mit den Carbodiimidgruppen kann erfolgen.

Die Herstellung der wässrigen Dispersion erfolgt vorzugsweise durch Emulsionspolymerisation.

Dazu werden die Carbodiimide vorzugsweise im Gemisch mit den Monomeren in Wasser mit Hilfe einer oberflächenaktiven Substanz emulgiert.

Insbesondere werden Carbonsäuregruppen enthaltende Monomere vor Zugabe der Carbodiimide zumindest teilweise neutralisiert bzw. die Carbonsäuregruppen blockiert. Es ist dabei keinesfalls notwendig, daß alle Carbonsäuregruppen blockiert oder neutralisiert werden. Nach Zugabe der Carbodiimide kommt es zu einer Umsetzung des Carbodiimidgruppen mit den vorhandenen, freien Carbonsäuregruppen, wodurch eine spätere Vernetzung (d.h. nach erfolgter Polymerisation) innerhalb des dispergierten Polymerteilchens bewirkt wird. Eine derartige "innere" Vernetzung trägt zur Ausbildung von guten anwendungstechnischen Eigenschaften, bei Klebstoffen insbesondere eine gute Reißkraft und Reißdehnung, bei. Es hat sich als besonders vorteilhaft erwiesen, wenn 10 bis 90 mol-%, besonders bevorzugt 30 bis 70 mol-%, ganz besonders bevorzugt 40 bis 60 mol-% der insgesamt ursprünglich vorhandenen Carbodiimidgruppen der Carbodiimide bereits mit Carbonsäuregruppen der Monomeren reagieren und daher ein entsprechender Gehalt an reaktiven Carbonsäuregruppen eingestellt wird. Der gewünschte Gehalt an reaktiven Carbonsäuregruppen bestimmt sich z.B. einfacher Weise durch den Neutralisierungsgrad.

Bei der Emulgierung in Wasser entstehen emulgierte Monomertröpfchen mit einem Durchmesser von bis zu 50 µm; die Carbodiimide sind in diesen Monomertröpfchen gelöst bzw. dispergiert. Bei der üblichen Emulsionspolymerisation findet die Polymerisation außerhalb dieser Monomertröpfchen in von der oberflächenaktiven Substanz gebildeten Micellen statt, welche um mindestens eine Größenordnung kleiner als die Monomertröpfchen sind.

Die Monomeren und Carbodiimide müssen daher durch die Wasserphase zum Polymerisationsort diffundieren. Obgleich die Carbodiimide sehr hydrophob sind, kann festgestellt werden, daß die Carbodiimide nach der Emulsionspolymerisation, wie gewünscht, in den Polymerteilchen enthalten sind.

Ein bevorzugtes Verfahren zur Herstellung der erfindungsgemäßen wässrigen Dispersion ist die Methode der Miniemulsionspolymerisation. Bei dieser Variante der Emulsionspolymerisation werden die Monomertröpfchen z.B. durch starke Scherung, fein dispergiert. Der Teilchendurchmesser der Monomertröpfchen beträgt dann nur noch bis zu 1 µm. Vorzugsweise wird den Monomeren ein sog. Costabilisator zugesetzt, der durch geringe Wasserlöslichkeit und hohe Löslichkeit in den Monomeren gekennzeichnet ist.

Die Polymerisation findet bei der Miniemulsionspolymerisation in den Monomertröpfchen selbst statt.

Generell werden bei der Emulsionspolymerisation ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständliche müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄ bis C₉), von Alkylsulfonsäuren (Alkylrest: C₁₂- bis C₁₈) und von Alkylarylsulfonsäuren (Alkylrest: C₉- bis C₁₈).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan®, OG, Texapon® NSO, Nekanil® 904 S, Lumiten® I-RA, Lumiten E 3065 etc.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässerigen Lösungen eingesetzt, wobei die untere Konzentration durch die in der Dispersion vertretbare Wassermenge und die obere Konzentration durch die Löslichkeit der betreffenden Verbindung in Wasser bestimmt ist.

Im allgemeinen beträgt die Konzentration 0,1 bis 30 Gew.-%, bevorzugt 0,5 bis 2,0 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,2 bis 5 Gew.-%, bezogen auf alle zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 150, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Bei der Emulsionspolymerisation wird eine wässrige Dispersion eines Polymeren erhalten, bei der die Carbodiimide nicht durch Copolymerisation an das Polymer kovalent gebunden sind, sondern vorzugsweise in den Polymerteilchen verteilt, d.h. gelöst oder dispergiert sind.

Die Carbodiimide vernetzen mit Carbonsäuregruppen. Eine Vernetzung kann stattfinden mit Carbonsäuregruppen, welche im gleichen Polymer vorhanden sind. Wie bereits oben ausgeführt sind diese Carbonsäuregruppen vorzugsweise zunächst blockiert oder neutralisiert, so daß sie nicht reaktiv sind.

Erst wenn die Vernetzung mit der vorhandenen Carbodiimidgruppen gewünscht wird, wird das Blockierungsmittel oder Neutralisierungsmittel entfernt.

In einer bevorzugten Ausführungsform sind die Carbonsäuregruppen mit einer Base, insbesondere einer flüchtigen Base neutralisiert, z.B. Ammoniak. Die flüchtige Base entweicht z.B. bei der späteren Anwendung während der Trocknung der aufgetragenen Beschichtungsoder Imprägnierungsmasse.

Der erfindungsgemäßen wässrigen Dispersionen kann zur Vernetzung insbesondere auch eine Verbindung mit mindestens zwei Carboxylgruppen zugesetzt werden, kurz Vernetzer genannt.

Es kann sich beim Vernetzer um niedermolekulare Verbindungen, z.B. Polycarbonsäuren, vorzugsweise Dicarbonsäuren wie Adipinsäure, etc. handeln.

Es kann sich beim Vernetzer auch um Polymere, z.B. radikalisch polymerisierte Polymere, Polyaddukte oder Polykondensate, z.B. Polyurethane oder Polyester, mit Carbonsäuregruppen, handeln (kurz polymerer Vernetzer genannt).

Im Falle des polymeren Vernetzers hängt die Auswahl des Polymeren von der späteren Verwendung der erfindungsgemäßen wässrigen Dispersion ab.

Im Falle der Verwendung der wässrigen Dispersion als Bindemittel dient auch der polymere Vernetzer als Bindemittel. In einer bevorzugten Ausführungsform handelt es sich beim polymeren Vernetzer um ein radikalisch polymerisiertes Polymer, welches zu mindestens 40 Gew.-%, vorzugsweise zu mindestens 60 Gew.-% aus den obigen Hauptmonomeren besteht.

Die Menge des Vernetzers wird vorzugsweise so gewählt, daß pro Mol Carbodiimidgruppe mindestens 0,1, insbesondere mindestens 0,5, besonders bevorzugt mindestens 0,8 Mol Carbonsäuregruppen vorhanden sind. Da die Reaktion zwischen den Carbodiimidgruppen und den Carbonsäuregruppen sehr einfach und im allgemeinen vollständig abläuft ist ein Überschuß der Carbonsäuregruppen nicht notwendig. Im allgemeinen wird die Menge der Carbonsäuregruppen des Vernetzers einen Wert von 10 Mol insbesondere 2 Mol pro 1 Mol Carbodiimidgruppe nicht übersteigen. Ein ausreichender Gehalt ist insbesondere 0,8 bis 1,2 Mol Carbonsäuregruppen pro Mol Carbodiimidogruppe.

Die vorstehenden Angaben über den Mindestgehalt an Carbonsäuregruppen gelten für den Fall, daß kein Vernetzer zugesetzt wird, entsprechend für den Gehalt der (zunächst blockierten bzw. neutralisierten) Carbonsäuregruppen des Carbodiimide enthaltenden Polymeren.

Die wässrige Dispersion ist auch nach Zusatz des Vernetzers lagerstabil und daher als einkomponentiges System verwendbar.

Die Vernetzung mit dem Vernetzer tritt erst bei Entfernung des Wassers ein.

Die erfindungsgemäße wässrige Dispersion eignet sich insbesondere als Bindemittel für Beschichtungsmittel oder Imprägnierungsmittel, z.B. für Klebstoffe, Lacke, Anstriche, Papierstreichmassen oder als Bindemittel für Faservliese, d.h. in allen Fällen, in denen eine Vernetzung und Erhöhung der inneren Festigkeit (Kohäsion) gewünscht ist.

Je nach Verwendungszweck kann die wässrige Dispersion Zusatzstoffe wie Verdicker, Verlaufshilfsmittel, Pigmente oder Füllstoffe, Fungizide etc. enthalten.

Bei der Verwendung als Klebstoff können die Dispersionen neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Polymer-Dispersionen, welche als Klebstoff Verwendung finden, enthalten besonders bevorzugt Alkyl(meth)acrylate als Hauptmonomere im Polymer. Bevorzugte Anwendungen im Klebstoffgebiet sind auch Kaschierklebstoffe, z.B. für die Verbund- und Glanzfolienkaschierung (Verklebung von transparenten Folien mit Papier oder Karton).

Die Glasübergangstemperatur der Polymeren (sowohl des Carbodiimid enthaltenden Polymeren als auch gegebenenfalls des polymeren vernetzers) wird bei der Verwendung als Klebstoff bevorzugt auf Werte kleiner 50°C, insbesondere kleiner 20°C besonders bevorzugt kleiner 10°C eingestellt (ASTM 3418/82, "midpoint temperature" der Differentialthermoanalyse).

Die wässrige Dispersion ist auch nach Zusatz des Vernetzers lagerstabil.

Die wässrige Dispersion kann nach üblichen Verfahren auf die zu beschichtenden oder zu imprägnierenden Substrate aufgebracht werden.

Die Vernetzung mit dem Vernetzer tritt mit Verflüchtigung des Wassers ein. Im Falle der Vernetzung mit Carbonsäuregruppen des Polymeren selbst entweicht mit dem Wasser eine flüchtige Base als Neutralisierungsmittel, so daß dann auch hier Vernetzung eintritt.

Die erhaltenen Beschichtungen und Imprägnierungen haben gute anwendungstechnische Eigenschaften, insbesondere eine hohe innere Festigkeit. Die hohe Festigkeit wird erreicht, obwohl die Carbodiimide nicht durch radikalische Copolymerisation und besonders bevorzugt auch in keiner sonstigen Weise kovalent an das Polymer gebunden sind. Gegebenenfalls kann angenommen werden, daß die Reaktion der Carbodiimide mit dem vernetzer oder mit Carbonsäuregruppen des Polymeren selbst eine Verschlaufung von Polymerketten bewirkt.

### I. Herstellung von wässrigen Dispersionen

### Beispiel 1

In einer wässrigen Phase, enthaltend 340 g Wasser, 18 g eines niederethoxylierten C13-Fettalkohols, 14 g einer 45 % wässrigen Lösung des Natriumsalzes der Disulfonsäure eines dodecylsubstituierten Diphenylethers, 42 g einer 15 %igen wässrigen Lösung von Natriumlaurylsulfat, 8 g Acrylamid und 4 g Acrylsäure, wurden 300 g Styrol und 435 g n-Butylacrylat dispergiert (Zulauf 1).

In einem 2 1-Reaktor wurden zu 200 g deionisiertem Wasser, enthaltend eine Polystyrol-Feinsaat (1 Gew.-Teil auf 100 Gew.-Teile Monomer) bei 80°C 8 g einer Lösung von 2 g Natriumpersulfat in 78 g Wasser (Zulauf 2) zugegeben. Dann wurden Zulauf 1 und die Restmenge von Zulauf 2 über 3 Stunden bei 80°C Temperatur zugefahren. Es wurde 1 Stunde bei 80°C zur Vervollständigung des Umsatzes nachreagiert, auf Raumtemperatur abgekühlt und der pH-Wert mit Natronlauge auf 8,5 eingestellt.

Teilchendurchmesser der erhaltenen Polymerteilchen: 200 nm, Festgehalt: 50,5 %.

### Beispiel 2

Die Synthese wurde analog zu Beispiel 1 durchgeführt, jedoch wurde in den zu dispergierenden Monomeren 2 Gew.-Teile (auf 100 Gew.-Teile Monomere) des methyldiglykolmodifiziertes Carbodiimid der Formel I gelöst:

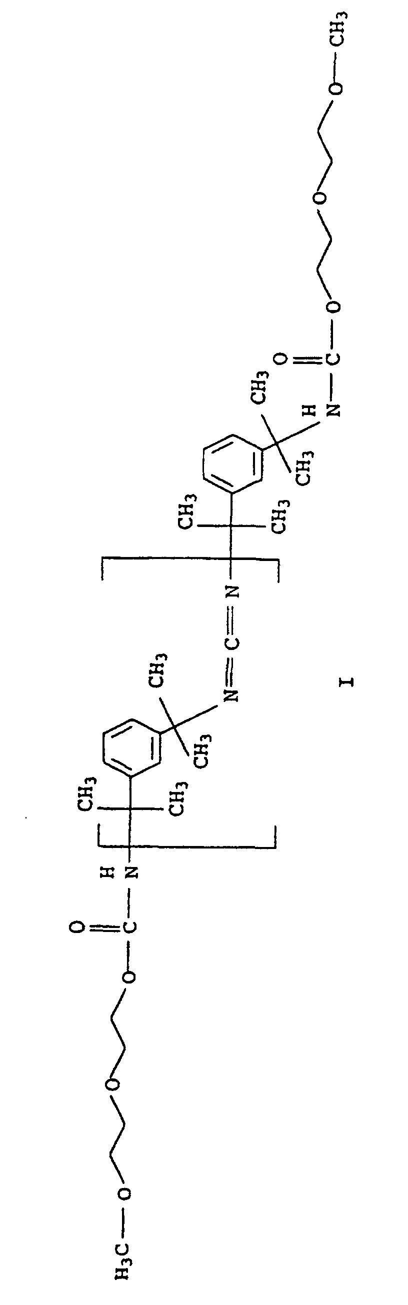

Die Acrylsäure im Zulauf 1 war wie in Beispiel 1 nicht neutralisiert. Sie reagiert daher bereits vollständig mit den Carbodiimidogruppen, so daß im späteren Polymer keine Carbodiimidgruppen mehr vorhanden sind.

Teilchendurchmesser der erhaltenen Polymerteilchen: 190 nm, Festgehalt: 49 %.

### Beispiel 3

Die Synthese wurde analog zu Beispiel 2 durchgeführt, jedoch wurde die wässrige Phase vor Zugabe der Monomerenmischung mit Natronlauge auf einen pH-Wert von 7 neutralisiert.

Teilchendurchmesser der erhaltenen Polymerteilchen: 195 nm, Festgehalt: 49,5 %.

### Beispiel 4

Die Synthese wurde analog zu Beispiel 3 durchgeführt, jedoch wurde die wässrige Phase vor Zugabe der Monomerenmischung durch Zugabe von Ammoniak auf einen pH-Wert von 9 neutralisiert.

Teilchendurchmesser der erhaltenen Polymerteilchen: 188 nm, Festgehalt: 49 %.

### II. Anwendungstechnische Prüfung

### Bestimmung der Reißkraft und Reißdehnung:

Nach DIN 53504 wurden mit einer Zugprüfmaschine die Reißkraft und Reißdehnung der aus den wäßrigen Dispersionen hergestellten Filme bestimmt.

Zur Beurteilung der Vernetzungseffizienz wurden temperaturabhängige Messungen des Speichermoduls E' durchgeführt. Hierbei deutet ein erhöhter Speichermodul auf eine Vernetzung des Polymerfilms hin. In der Tabelle ist der Wert für E' bei 150°C in Pascal angegeben.

| Beispiel | Reißkraft (N/mm²) | Reißdehnung (%) | E' |
|---|---|---|---|
| 1* | 2,56 | 1024 | 10000 |
| 2* | 3,17 | 653 | 2000 |
| 3 | 2,1 | 1172 | 60000 |
| 4 | 3,48 | 1051 | 100000 |

| | | | |
|---|---|---|---|
| * zum vergleich | | | |

### III.Herstellung eines Miniemulsionspolymerisates

In einem Reaktionsgefäß mit Rührer wurde eine wässrige Emulgatorlösung vorgelegt. Hierzu gab man innerhalb von 2 Minuten eine Lösung des Carbodiimids der Formel II in den zu polymerisierenden Monomeren (Monomer/Carbodiimidlösung). Anschließend rührte man weitere 10 Minuten. Die Carbodiimid-haltigen Monomeremulsionen wurden mittels Ultraschall homogenisiert, so daß Miniemulsionen mit einem Teilchendurchmesser unter 1 µm erhalten wurden (= Zulauf 1). Die Vorlage 2 wurde in einem Polymerisationsgefäß vorgelegt und unter Rühren auf 80°C erwärmt. Nach Erhitzen der Vorlage 2 auf 80°C wurden Zulauf 1, Zulauf 2 und Zulauf 3 gleichzeitig gestartet und in die Vorlage 2 unter Rühren innerhalb von 3 Stunden zugegeben. Nach Beendigung der Zugabe von Zulauf 1 und Zulauf 2 in die Vorlage 2 wurde noch 30 Minuten bei 80°C nachpolymerisiert und dann auf 25°C abgekühlt.

| | | |
|---|---|---|
| Zulauf 1 | 1547,1 g | H₂O |
| | 21 g | Steinapol NLS (Na-Laurylsulfat) |
| | | (Emulgator) |
| | 105 g | Carbodiimid (Formel II) |
| | 840 g | n-Butylacrylat |
| | 210 g | Methylacrylat |
| | | |
| Vorlage 2 | 375 g | Wasser |
| | 3,15 g | Ethylendiamintetraessigsäure-Eisen |
| | | III-Natriumsalz |
| | | |
| Zulauf 2 | 199,5 g | Wasser |
| | 10,5 g | Na-persulfat |
| | | |
| Zulauf 3 | 42 g | 10 %ige NaOH |

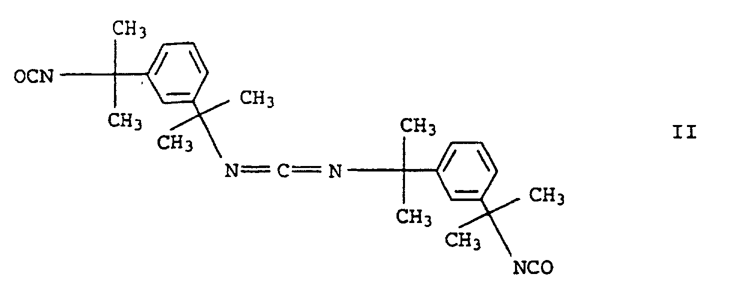

### IV. Prüfung des Miniemulsionspolymerisats als Klebstoff für die Glanzfolienkaschierung

Glanzfolienkaschierung mit Karton (Chromoduplex-Karton) und Polypropylen (Corona-vorbehandelt) bzw. mit Karton und Celluloseacetatfolie

Der unter III erhaltenen Miniemulsion wurde ein Vernetzer mit Carbonsäuregruppen zugesetzt. Beim Vernetzer handelte es sich um eine wäßrige Dispersion eines Polyacrylats, welches zu 2 Gew.-% aus Acrylsäure aufgebaut ist (Feststoffgehalt 55 Gew.-%, pH-Wert 6,5). Die erhaltene Dispersion wurde dann als Klebstoff verwendet.

Die vorbehandelte Seite der Polypropylenfolie (PP) bzw. der Acetatfolie wurde mit Klebstoff beschichtet. Nach dem Trocknen mit Kaltluft wurde der Karton aufgelegt und mit einer Laborkaschierrolle angerollt. Die zugeschnittenen Kaschierungen wurden in der Rollenpresse gepreßt.

Die Haftung wurde durch Abziehen der Folie vom Karton im Winkel von ca. 180 Grad geprüft.

Auswertung:
- 1 =: Vollflächiger Papier- oder Farbausriß
- 2 =: Teilweiser Papier- oder Farbausriß
- 3 =: Gute Haftung mit Adhäsionsbruch Karton oder Folie (AK, AF)
- 4 =: Schwache Haftung mit AK oder AF
- 5 =: Keine Haftung auf Karton oder Folie

Zur Bestimmung der Nutstandfestigkeit wurden die kaschierten Proben 1 Woche bzw. 6 Wochen nach der obigen Herstellung genutet.

Beurteilung der Nutung:
- 1 =: Nut ist vollständig in Ordnung
- 2 =: Nut ist nur an vereinzelten Stellen leicht geöffnet
- 3 =: Nut ist an einzelnen Stellen deutlich geöffnet
- 4 =: Nut ist vollständig offen

Zum Vergleich wurde in gleicher Weise Acronal®A 3105 geprüft. Es handelt sich dabei um ein vernetzendes Emulsionspolymerisat, welches als Glanzfolienkaschierklebstoff Verwendung findet.

| Ergebnisse: | Trägermaterial | Haftung nach | | | Nutstandfestigkeit nach | |
|---|---|---|---|---|---|---|
| | | 24 h | 1 Woche | 6 Wochen | 1 Woche | 6 Wochen |
| Miniemulsion¹⁾ | oPP-Folie | 1 | 1 | 1 | 1 | 1-2 |
| | Acetat-Folie | 1 | 1 | 1 | 1 | 1-2 |
| Miniemulsion²⁾ | oPP-Folie | 1 | 1 | 1 | 1 | 1 |
| | Acetat-Folie | 1 | 1 | 1 | 1 | 1 |
| Acronal A 3105 | oPP-Folie | 1 | 1 | 1 | 2 | 2-3 |
| | Acetat-Folie | 1 | 1 | 1 | 2 | 2-3 |

| | | | | | | |
|---|---|---|---|---|---|---|
| ¹⁾ 1 Gew.-Teil der Miniemulsion wurde mit 1 Gew.-Teil der Vernetzer-Dispersion gemischt. | | | | | | |
| ²⁾ 2 Gew.-Teile der Miniemulsion wurden mit 1 Gew.-Teil der Vernetzer-Dispersion gemischt. | | | | | | |

## Patentansprüche

1. Wäßrige Dispersion eines Polymeren, aufgebaut aus radikalisch polymerisierbaren Verbindungen (Monomere), **dadurch gekennzeichnet, daß** die dispergierten Polymerteilchen Verbindungen mit Carbodiimidgruppen (kurz Carbodiimide) enthalten und die Carbodiimide in den Polymerteilchen gelöst oder dispergiert sind.

2. Wäßrige Dispersion gemäß Anspruch 1, **dadurch gekennzeichnet, daß** die Carbodiimide eine wasserlöslichkeit kleiner 50 g pro Liter Wasser (21°C) haben.

3. Wäßrige Dispersion gemäß Anspruch 1 oder 2, **dadurch gekennzeichnet, daß** die Carbodiimide ein zahlenmittleres Molekulargewicht Mn von 100 bis 10000 g/mol haben.

4. Wäßrige Dispersion gemäß einem der Ansprüche 1 bis 3, **dadurch gekennzeichnet, daß** die Carbodiimide 1 bis 20 Carbodiimidgruppen enthalten.

5. Wäßrige Dispersion gemäß einem der Ansprüche 1 bis 4, **dadurch gekennzeichnet, daß** die Carbodiimide Isocyanatgruppen oder deren Umsetzungsprodukte mit Alkoholen, Thiolen, primären oder sekundären Aminen enthalten.

6. Wäßrige Dispersion gemäß einem der Ansprüche 1 bis 5, **dadurch gekennzeichnet, daß** die Carbodiimide keine ionische Gruppen und keine Polyalkylenoxydgruppen mit mehr als 5 EthylenoxidEinheiten enthalten.

7. Wäßrige Dispersion gemäß einem der Ansprüche 1 bis 6, **dadurch gekennzeichnet, daß** die Carbodiimide aus Kohlenwasserstoffgruppen, Carbodiimidgruppen, und gegebenenfalls Isocyanatgruppen, bzw deren Umsetzungsprodukte mit Hydroxyl-, Thiol oder primären oder sekundären Aminogruppen bestehen.

8. Wäßrige Dispersionen gemäß einem der Ansprüche 1 bis 7, **dadurch gekennzeichnet, daß** 0,0001 bis 2 mol Carbodiimidgruppen pro kg Polymer vorliegen.

9. Wäßrige Dispersion gemäß einem der Ansprüche 1 bis 8, **dadurch gekennzeichnet, daß** es sich bei dem Polymeren um ein Emulsionspolymerisat handelt.

10. Wäßrige Dispersion gemäß einem der Ansprüche 1 bis 9, **dadurch gekennzeichnet, daß** das Emulsionspolymerisat erhältlich ist durch Emulsionspolymerisation von in Wasser emulgierten Monomertröpfchen mit einem Teilchendurchmesser von bis zu 50 µm und die Carbodiimide in diesen Monomertröpfchen gelöst oder dispergiert sind.

11. Wäßrige Dispersion gemäß einem der Ansprüche 1 bis 10, **dadurch gekennzeichnet, daß** das Emulsionspolymerisat erhältlich ist nach der Methode der Miniemulsionspolymerisation, bei der die in Wasser emulgierten Monomertröpfchen einen Teilchendurchmesser von bis zu 1 µm aufweisen und die Carbodiimide in diesen Monomertröpfchen gelöst oder dispergiert sind.

12. Wäßrige Dispersionen gemäß einem der Ansprüche 1 bis 11, **dadurch gekennzeichnet, daß** das Polymer insgesamt zu mindestens 40 Gew %, aus Hauptmonomeren ausgewählt aus C1 bis C20 Alkyl(meth)acrylaten, Vinylaromaten mit bis zu 20 C-Atomen, Vinylestern von Carbonsäuren mit 1 bis 20 C-Atomen, ethylenisch ungesättigten Nitrilen, Vinylethern von 1 bis 10 C Atome enthaltenden Alkoholen, Vinylhalogeniden, nicht aromatischen Kohlenwassersoffen mit 2 bis 8 C Atomen und mit einer oder zwei konjugierten Doppelbindungen oder Mischungen dieser Monomeren besteht.

13. Wäßrige Dispersion gemäß einem der Ansprüche 1 bis 12, **dadurch gekennzeichnet, daß** Carbonsäuregruppen des Polymeren zumindest teilweise neutralisiert sind.

14. Wäßrige Dispersion gemäß einem der Ansprüche 1 bis 13, **dadurch gekennzeichnet, daß** die wäßrige Dispersion als Vernetzer eine Verbindung mit mindestens zwei Carboxylgruppen enthält.

15. Wäßrige Dispersion gemäß einem der Ansprüche 1 bis 14, **dadurch gekennzeichnet, daß** es sich bei dem Vernetzer um ein radikalische polymerisiertes Polymer, ein Polyaddukt oder ein Polykondensat handelt.

16. Verwendung der wäßrigen Dispersion gemäß einem der Ansprüche 1 bis 15 als Bindemittel für Beschichtungsmittel oder Imprägnierungsmittel.

17. Verwendung der wäßrigen Dispersion gemäß einem der Ansprüche 1 bis 15 als Bindemittel in Klebstoffen, Lacken, Anstrichen, Papierstreichmassen oder als Bindemittel für Faservliese.

18. Verwendung der wäßrigen Dispersion gemäß einem der Ansprüche 1 bis 15 als Bindemittel für Kaschierklebstoffe, insbesondere für Glanzfolienkaschierklebstoffe.

19. Beschichtungsmittel oder Imprägnierungsmittel, enthaltend eine wäßrige Dispersion gemäß einem der Ansprüche 1 bis 15.

20. Mit einer wäßrigen Dispersion gemäß einem der Ansprüche 1 bis 15 beschichtete Substrate.

## Claims

1. An aqueous dispersion of a polymer synthesized from free-radically polymerizable compounds (monomers), wherein the dispersed polymer particles comprise compounds containing carbodiimide groups (carbodiimides for short) and the carbodiimides are dissolved or dispersed in the polymer particles.

2. An aqueous dispersion as claimed in claim 1, wherein the carbodiimides have a water solubility of less than 50 g per liter of water (21°C).

3. An aqueous dispersion as claimed in claim 1 or 2, wherein the carbodiimides have a number-average molecular weight Mn of from 100 to 10,000 g/mol.

4. An aqueous dispersion as claimed in any of claims 1 to 3, wherein the carbodiimides contain from 1 to 20 carbodiimide groups.

5. An aqueous dispersion as claimed in any of claims 1 to 4, wherein the carbodiimides contain isocyanate groups or their reaction products of alcohols, thiols, or primary or secondary amines.

6. An aqueous dispersion as claimed in any of claims 1 to 5, wherein the carbodiimides contain no ionic groups and no polyalkylene oxide groups having more than 5 ethylene oxide units.

7. An aqueous dispersion as claimed in any of claims 1 to 6, wherein the carbodiimides consist of hydrocarbon groups, carbodiimide groups, and, if desired, isocyanate groups, and/or their reaction products with hydroxyl, thiol, or primary or secondary amino groups.

8. An aquoeus dispersion as claimed in any of claims 1 to 7, wherein there are from 0.0001 to 2 mol of carbodiimide groups per kg of polymer.

9. An aqueous dispersion as claimed in any of claims 1 to 8, wherein the polymer is an emulsion polymer.

10. An aqueous dispersion as claimed in any of claims 1 to 9, wherein the emulsion polymer is obtainable by emulsion polymerization of monomer droplets, emulsified in water, having a particle diameter of up to 50 µm and carbodiimides are present in solution or dispersion in these monomer droplets.

11. An aqueous dispersion as claimed in any of claims 1 to 10, wherein the emulsion polymer is obtainable by the method of miniemulsion polymerization, in which the water-emulsified monomer droplets have a particle diameter up to 1 µm and the carbodiimides are present in solution or dispersion in these monomer droplets.

12. An aqeuous dispersion as claimed in any of claims 1 to 11, wherein the polymer consists in total of at least 40% by weight of principal monomers selected from C1 to C20 alkyl (meth)acrylates, vinylaromatic compounds having up to 20 carbon atoms, vinyl esters of carboxylic acids having 1 to 20 carbon atoms, ethylenically unsaturated nitriles, vinyl ethers of alcohols containing 1 to 10 carbon atoms, vinyl halides, nonaromatic hydrocarbons having 2 to 8 carbon atoms and having one or two conjugated double bonds, or mixtures of these monomers.

13. An aqueous dispersion as claimed in any of claims 1 to 12, wherein carboxylic acid groups of the polymer are at least partially neutralized.

14. An aqueous dispersion as claimed in any of claims 1 to 13, wherein the aqueous dispersion comprises as crosslinker a compound having at least two carboxyl groups.

15. An aqueous dispersion as claimed in any of claims 1 to 14, wherein the crosslinker comprises a free-radically polymerized polymer, a polyadduct, or a polycondensate.

16. The use of an aqueous dispersion as claimed in any of claims 1 to 15 as a binder for a coating composition or impregnating composition.

17. The use of an aqueous dispersion as claimed in any of claims 1 to 15 as a binder in adhesives, varnishes, paints, or paper coating slips, or as a binder for fiber nonwovens.

18. The use of an aqueous dispersion as claimed in any of claims 1 to 15 as a binder for laminating adhesives, especially for high-gloss film laminating adhesives.

19. A coating composition or impregnating composition comprising an aqeous dispersion as claimed in any of claims 1 to 15.

20. A substrate coated with an aqueous dispersion as claimed in any of claims 1 to 15.

## Revendications

1. Dispersion aqueuse d'un polymère, constituée de composés polymérisables par voie radicalaire (monomères), **caractérisée en ce que** les particules de polymère dispersées contiennent des composés à groupes carbodiimide (en abrégé des carbodiimides) et **en ce que** les carbodiimides sont dissous ou dispersés dans les particules de polymère.

2. Dispersion aqueuse suivant la revendication 1, **caractérisée en ce que** les carbodiimides ont une solubilité dans l'eau inférieure à 50 g par litre d'eau (21 °C).

3. Dispersion aqueuse suivant l'une des revendications 1 et 2, **caractérisée en ce que** les carbodiimides présentent un poids moléculaire moyen numérique Mn de 100 à 10.000 g/mole.

4. Dispersion aqueuse suivant l'une des revendications 1 à 3, **caractérisée en ce que** les carbodiimides contiennent 1 à 20 groupes carbodiimide.

5. Dispersion aqueuse suivant l'une des revendications 1 à 4, **caractérisée en ce que** les carbodiimides contiennent des groupes isocyanate ou leurs produits de réaction avec des alcools, des thiols, des amines primaires ou secondaires.

6. Dispersion aqueuse suivant l'une des revendications 1 à 5, **caractérisée en ce que** les carbodiimides ne contiennent aucun groupe ionique et aucun groupe oxyde de polyalkylène présentant plus de 5 unités d'oxyde d'éthylène.

7. Dispersion aqueuse suivant l'une des revendications 1 à 6, **caractérisée en ce que** les carbodiimides sont constitués de groupes d'hydrocarbure, de groupes carbodiimide, et éventuellement de groupes isocyanate, et respectivement de leurs produits de réaction avec des groupes hydroxyle, thiol ou amino primaire ou secondaire.

8. Dispersion aqueuse suivant l'une des revendications 1 à 7, **caractérisée en ce qu'**il y a 0,0001 à 2 moles de groupes carbodiimide par kg de polymère.

9. Dispersion aqueuse suivant l'une des revendications 1 à 8, **caractérisée en ce que**, en ce qui concerne le polymère, il s'agit d'un produit de polymérisation en émulsion.

10. Dispersion aqueuse suivant l'une des revendications 1 à 9, **caractérisée en ce que** le produit de polymérisation en émulsion peut être obtenu par polymérisation en émulsion de gouttelettes de monomère émulsionnées dans l'eau et présentant un diamètre de particules allant jusqu'à 50 µm et **en ce que** les carbodiimides sont dissous ou dispersés dans ces gouttelettes de monomères.

11. Dispersion aqueuse suivant l'une des revendications 1 à 10, **caractérisée en ce que** le produit de polymérisation en émulsion peut être obtenu selon la méthode de la polymérisation en miniémulsion dans laquelle les gouttelettes de monomère émulsionnées dans l'eau présentent un diamètre de particule allant jusqu'à 1 µm et les carbodiimides sont dissous ou dispersés dans ces gouttelettes de monomère.

12. Dispersions aqueuses suivant l'une des revendications 1 à 11, **caractérisées en ce que** le polymère est constitué globalement pour au moins 40% en poids, de monomères principaux choisis parmi des (méth)acrylates d'alkyle en C1-C20, des substances vinyl-aromatiques comportant jusqu'à 20 atomes de C, des esters vinyliques d'acides carboxyliques présentant 1 à 20 atomes de C, des nitriles éthyléniquement insaturés, des éthers vinyliques d'alcools contenant 1 à 10 atomes de C, des halogénures de vinyle, des hydrocarbures non aromatiques comprenant 2 à 8 atomes de C et une ou deux doubles liaisons conjuguées, ou des mélanges de ces monomères.

13. Dispersion aqueuse suivant l'une des revendications 1 à 12, **caractérisée en ce que** des groupes acide carboxylique du polymère sont au moins partiellement neutralisés.

14. Dispersion aqueuse suivant l'une des revendications 1 à 13, **caractérisée en ce que** la dispersion aqueuse contient, comme agent de réticulation, un composé comportant au moins deux groupes carboxyle.

15. Dispersion aqueuse suivant l'une des revendications 1 à 14, **caractérisée en ce que**, pour ce qui concerne l'agent de réticulation, il s'agit d'un polymère polymérisé par voie radicalaire, d'un produit de polyaddition ou d'un polycondensat.

16. Utilisation de la dispersion aqueuse suivant l'une des revendications 1 à 15, comme liant pour des produits de revêtement ou des produits d'imprégnation.

17. Utilisation de la dispersion aqueuse suivant l'une des revendications 1 à 15, comme liant dans des colles, des vernis, des peintures, des masses d'enduction de papier ou comme liant pour des tissus non tissés.

18. Utilisation de la dispersion aqueuse suivant l'une des revendications 1 à 15, comme liant pour des substances adhésives de couchage, en particulier de couchage à pellicule brillante.

19. Produit de revêtement ou d'imprégnation, contenant une dispersion aqueuse suivant l'une des revendications 1 à 15.

20. Substrats enduits par une dispersion aqueuse suivant l'une des revendications 1 à 15.
